# DEMANDE DE BREVET EUROPEEN

(11) **EP 1 683 666 A2**
(43) Date de publication de la demande: **26.07.2006**
(21) Numéro de dépôt: 05112673.8
(22) Date de dépôt: 21.12.2005
(51) Int. Cl.: B60J 1/20, B60J 7/00, B60R 5/04

(54) **Dispositif d'occultation pour véhicule automobile, et véhicules correspondants**

(30) Priorité: 20.01.2005 FR 0500598
(71) Demandeur: WAGON SAS, 79302 Bressuire Cedex (FR)
(72) Inventeur: Jincheleau, Michel, 79320 Moncoutant (FR)
(74) Mandataire: Bioret, Ludovic

(57) **Abrégé**

L'invention concerne un dispositif d'occultation pour véhicule automobile, comprenant une toile d'occultation dont une extrémité est montée sur un tube d'enroulement et l'autre extrémité porte une barre de tirage, la barre de tirage portant à chacune de ses extrémités un patin monté coulissant dans un rail de guidage.

Selon l'invention, le dispositif d'occultation comprend des moyens d'application d'une contrainte sur au moins une des extrémités de la barre de tirage, et au moins un des patins est dans une position basculée dans laquelle il est en appui contre deux parois opposées du rail, de façon à limiter les vibrations.

## Description

Le domaine de l'invention est celui des véhicules automobiles. Plus précisément, l'invention concerne la mise en oeuvre de stores d'occultation dans les véhicules automobiles.

Des dispositifs d'occultation (ou stores) sont fréquemment mis en oeuvre dans les véhicules automobiles, par exemple pour l'occultation de surfaces vitrées telles que les vitres latérales, les vitres de custode, la vitre arrière ou le hayon du véhicule ou encore un pavillon ou un toit ouvrant. Ils peuvent également être utilisés pour l'occultation d'un espace arrière destiné à recevoir des bagages et avoir ainsi la fonction de cache-bagages.

De tels dispositifs d'occultation comprennent classiquement une toile (ou rideau) d'occultation montée sur un enrouleur et portant, au niveau de son extrémité libre, une barre de tirage. Celle-ci est généralement guidée dans son déplacement par un ou plusieurs patins équipant chacune ses extrémités et se déplaçant dans un ou plusieurs rails de guidage. La mise en mouvement de ces patins peut être manuelle ou motorisée.

Souvent, les rails ne sont pas rectilignes, car ils doivent suivre des courbes imposées par la forme et la structure du véhicule. De plus, des tolérances doivent être prises en compte lors de la construction des véhicules automobiles. Il est en effet possible qu'un écart de quelques millimètres existe entre deux exemplaires d'un même véhicule.

Ainsi, afin de limiter les problèmes de blocage et les frottements des patins lors de leur déplacement dans les rails de guidage, un certain jeu est prévu entre la dimension du patin et l'écartement des parois du rail dans lequel il se déplace.

Cependant, lorsque la barre de tirage est à l'arrêt, le jeu existant entre les patins et les parois du rail est à l'origine de vibrations des patins à l'intérieur des rails lorsque le véhicule est en mouvement.

Ces vibrations sont à l'origine d'un bruit désagréable et fatiguant pour le conducteur, ainsi que pour les autres occupants du véhicule.

En outre, les vibrations du patin à l'intérieur des rails de guidage sont également susceptibles d'être à l'origine d'une usure de celui-ci.

Des techniques connues de l'art antérieur prévoient l'utilisation de patins avec compensation de jeu, permettant de limiter le jeu du patin dans le rail et par conséquent le bruit généré.

Ainsi, une première technique connue met en oeuvre la déformation élastique du patin ou d'une lame liée au patin par exemple. Une seconde technique met en oeuvre une feutrine pouvant se comprimer.

D'une façon générale, la mise en oeuvre des techniques connues est longue et peu aisée, et donc coûteuse. Il faut tout d'abord mettre en place les rails, puis vérifier leur bon positionnement, et le cas échéant effectuer les réglages fins nécessaires. Il faut ensuite assembler la barre de tirage et ses patins, et à nouveau contrôler et régler précisément leur positionnement. Enfin, il faut monter la barre de tirage sur les rails, et à nouveau effectuer les réglages nécessaires.

Les patins sont alors prêts à être utilisés, et fonctionnent en principe convenablement, au moins au départ. Ensuite, du fait de l'usure du véhicule et du composant, des chocs, des vibrations,... les réglages ont généralement tendance à varier, et l'on rencontre alors à nouveau les problèmes de vibrations des patins.

En d'autres termes, les techniques connues peuvent présenter des problèmes de fiabilité dans le temps et ne sont donc pas satisfaisantes.

De plus, elles nécessitent de nombreux réglages lors du montage du dispositif.

L'invention a notamment pour objectif de pallier ces inconvénients des techniques de l'art antérieur.

Plus précisément, un objectif de l'invention est de fournir une technique de mise en oeuvre d'un store comprenant une barre de tirage dans un véhicule automobile, qui permette de limiter les vibrations des patins dans les rails de guidage de façon à limiter le bruit dû aux vibrations.

Un objectif de l'invention est de fournir une telle technique qui soit simple et peu coûteuse, tant en ce qui concerne sa fabrication que son montage sur le véhicule.

Un autre objectif de l'invention est ainsi de fournir une telle technique, ne nécessitant pas la mise en oeuvre d'un nombre important de pièces, ni la mise en oeuvre de pièces complexes.

L'invention a également pour objectif de fournir une telle technique, qui permette une fabrication industrielle simple et rapide, avec des moyens classiques.

Un autre objectif de l'invention est de fournir une telle technique, permettant une mise en place aisée sur un véhicule, avec des tolérances supérieures à celles des techniques connues.

Encore un autre objectif de l'invention est d'éviter la présence d'un élément déformable de compensation du jeu des patins.

L'invention a encore pour objectif de fournir une telle technique, présentant une bonne fiabilité dans le temps.

Ces objectifs, ainsi que d'autres qui apparaîtront plus clairement par la suite, sont atteints selon l'invention à l'aide d'un dispositif d'occultation pour véhicule automobile, comprenant une toile d'occultation dont une extrémité est montée sur un tube d'enroulement et l'autre extrémité porte une barre de tirage, la barre de tirage portant à chacune de ses extrémités un patin monté coulissant dans un rail de guidage.

Selon l'invention, le dispositif d'occultation comprend des moyens d'application d'une contrainte sur au moins une des extrémités de la barre de tirage, et au moins un des patins est dans une position basculée dans laquelle il est en appui contre deux parois opposées du rail, de façon à limiter les vibrations.

Ainsi, de façon simple, efficace et fiable, la contrainte s'exerçant sur la barre de tirage permet de limiter les vibrations des patins à l'intérieur des rails de guidage lorsque le véhicule roule ou que le moteur tourne.

Chacun des patins est en appui contre les deux parois (ou bord) opposées de chacun des rails, ce qui supprime leur jeu et limite leur vibration lorsque le véhicule est en mouvement.

En effet, la contrainte s'exerçant sur la barre de tirage, ou tout au moins sur ses extrémités, est transmise à chacun des patins les équipant, ceux-ci étant dans une position basculée à l'intérieur des rails. Chacun des patins est alors en appui contre les parois (ou bord) opposées de chacun des rails, ce qui supprime leur jeu et limite leur vibration lorsque le véhicule est en mouvement.

Ainsi, avantageusement, les patins sont solidarisés à la barre de tirage de façon que la contrainte s'exerçant sur les extrémités de la barre de tirage s'exerce également sur les patins.

Selon une première approche avantageuse de l'invention, la contrainte s'exerçant sur la barre de tirage est inhérente à celle-ci. Ainsi, les patins sont en position basculée, en appui contre chacune des parois opposées des rails de guidage, sous l'effet de cette contrainte s'exerçant aux extrémités de la barre de tirage et transmise aux patins.

Selon un premier mode de réalisation avantageux, les moyens d'application d'une contrainte comprennent le vrillage de la barre de tirage. Ainsi, les patins sont en position basculée sous l'effet du mouvement rotatif imprimé par la contrainte due au vrillage de la barre de tirage.

En outre, lorsque la barre est vrillée, la contrainte transmise à chacun des patins est exactement l'inverse de l'autre. En effet, le vrillage de la barre est à l'origine d'une contrainte de même intensité mais inversée à chacune de ses extrémités. Les patins sont donc dans une position basculée inversée l'un par rapport à l'autre.

Selon un second mode de réalisation avantageux, les moyens d'application d'une contrainte comprennent des moyens de rappel de la barre de tirage, tel qu'un ressort de rappel par exemple.

Dans ce cas, la contrainte s'exerçant à chacune des extrémités de la barre de tirage est la même et les patins sont dans une position basculée identique.

Par ailleurs, les moyens de rappels peuvent être prévus de façon qu'ils s'exercent dans le sens dans lequel la légère rotation de la barre de tirage provoque une légère tension du rideau (ou toile) d'occultation de façon que celui-ci soit plus tendu et ne « pôche » pas.

De façon préférentielle, au moins un des deux patins présente deux premières protubérances situées chacune à une extrémité différente de chacune des deux faces opposées tournées vers deux parois opposées du rail dans lequel coulisse le patin.

Chacune des deux extrémités d'un patin présente ainsi une protubérance située chacune sur une face opposée du patin.

Ces premières protubérances permettent de limiter la surface du patin en contact avec les deux parois opposées du rail, et susceptibles d'être à l'origine de frottements lors du coulissement du patin à l'intérieur du rail.

Selon la première approche avantageuse de l'invention selon laquelle la contrainte s'exerçant sur la barre de tirage est inhérente à celle-ci et transmise aux patins, au moins un des patins pourra présenter deux secondes protubérances supplémentaires réparties chacune à une extrémité du patin, sur une des deux faces opposées et tournées vers deux parois opposées du rail qui ne présentent pas de première protubérance. Le patin présente ainsi une protubérance à chacune de ses extrémités et ce sur chacune des deux faces opposées.

Selon un premier mode de réalisation avantageux de ces patins, les premières et les secondes protubérances pourront être de même hauteur.

Le corps du patin est généralement de forme parallélépipédique, toute autre forme pouvant cependant également être envisagée.

Ainsi, sous l'effet de la contrainte s'exerçant sur la barre de tirage, chacun des patins est en position basculée à l'intérieur du rail, chacune des deux protubérances situées chacune à une extrémité différente de chacune des deux faces opposées étant alors en appui contre chacune des parois opposées du rail, c'est-à-dire, par exemple les deux premières protubérances.

Selon un second mode de réalisation avantageux, au moins un des patins est asymétrique par rapport à un plan perpendiculaire à l'axe longitudinal du rail de guidage dans lequel il se déplace.

De façon préférentielle, deux premières protubérances, situées chacune à une extrémité différente des deux faces opposées, présentent une hauteur supérieure aux deux secondes protubérances.

Ainsi, une des faces du patin présente à l'une de ses extrémités (par exemple à l'avant du patin) une première protubérance dont la hauteur est supérieure à celle de la seconde protubérance située à l'autre extrémité (l'arrière du patin). La face du patin opposée à celle-ci présente quant à elle, au contraire, une première protubérance de hauteur supérieure à l'extrémité située à l'arrière du patin, c'est-à-dire du côté où se situe la seconde protubérance de hauteur inférieure sur la face opposée, et au niveau de l'extrémité située à l'avant du patin, elle présente une première protubérance de hauteur supérieure.

En tout état de cause, le patin présentant les protubérances est alors asymétrique par rapport à un plan perpendiculaire au rail de guidage dans lequel coulisse le patin.

De façon avantageuse, le patin est symétrique par rapport à un centre de symétrie.

Ainsi, dans le cas où le patin présente deux premières protubérances de hauteur supérieure aux deux secondes protubérances, l'existence d'un centre de symétrie correspond au cas où la hauteur (et la forme) des deux premières protubérances est la même, et où la hauteur (et la forme) des deux secondes protubérances est également la même.

Avantageusement, selon la première approche de l'invention, la hauteur entre les sommets des deux premières protubérances est inférieure à la distance séparant les parois du rail. Le patin est alors introduit sans difficulté dans le rail et la position basculée des patins sous l'effet de la contrainte assure l'appui des premières protubérances contre les parois du rail.

De préférence, selon la première approche de l'invention, chaque patin présentant les premières et secondes protubérances telles que définies ci-avant, est solidarisé à une extrémité de la barre de tirage de façon que, sous l'effet de la contrainte, le patin soit en position basculée dans le sens dans lequel ce sont les deux premières protubérances (c'est-à-dire celles dont la hauteur est la plus grande) qui sont en appui contre les bords opposés du rail de guidage.

Ainsi, lorsque des moyens de rappels sont à l'origine de la contrainte, les patins sont dans une position basculée identique à l'intérieur des rails de guidage, et lorsque ceux-ci sont asymétriques, comme défini précédemment, ils sont de préférence identiques et placés dans le même sens.

Au contraire, lorsque la contrainte comprend le vrillage de la barre de tirage, la contrainte s'exerçant à chacune des extrémités de la barre de tirage étant l'inverse de l'autre, les patins sont dans une position basculée inversée l'un par rapport à l'autre.

Dans ce cas, les deux patins équipant les extrémités de la barre de tirage sont, de façon préférée, identiques, mais placés en sens inverse l'un par rapport à l'autre dans chacun des rails.

Cela permet en effet que, pour chacun des deux patins, ce soient les premières protubérances qui viennent en appui contre les bords des rails de guidage.

Selon une seconde approche avantageuse de l'invention, la contrainte s'exerçant sur la barre de tirage est assurée par les patins. Les patins présentent alors deux premières protubérances telles que définies précédemment.

Avantageusement, la hauteur séparant le sommet de chacune des deux premières protubérances est supérieure à la distance entre les deux parois opposées d'un rail. Les patins doivent donc être basculés lors du montage et de leur introduction dans les rails de guidage et restent dans cette position basculée à l'intérieur du rail, les sommets de chacune des deux premières protubérances étant en appui contre chacune des parois opposées du rail.

De façon préférée, les deux patins montés à chacune des extrémités de la barre de tirage sont identiques mais placés en sens inverse l'un par rapport à l'autre.

Les patins sont donc dans des positions basculées inversées l'un par rapport à l'autre, et sont ainsi à l'origine d'une contrainte s'exerçant sur la barre de tirage et provoquent le vrillage de celle-ci.

Ce vrillage de la barre de tirage tend à maintenir les patins dans la position basculée dans laquelle les premières protubérances sont en appui contre les parois du rail, en empêchant les patins de basculer plus, même si cela s'avérait possible du point de vue de la forme et des dimensions du patin par rapport à celles du rail.

Cette seconde approche de l'invention est avantageuse dans la mesure où elle est simple, et donc peu coûteuse, à mettre en oeuvre. En effet, la barre de tirage utilisée est une barre de tirage classique, sans contrainte préalable s'exerçant sur celle-ci. Ce sont les patins équipant ses extrémités et leur montage à l'intérieur des rails qui sont à l'origine de la contrainte s'exerçant sur la barre de tirage et du vrillage de celle-ci.

De façon avantageuse, les patins pourront également présenter des secondes protubérances réparties tel que décrit précédemment, la hauteur de celles-ci étant alors inférieure à celle des premières protubérances, de façon qu'elles n'empêchent pas de pouvoir loger le patin à l'intérieur du rail en position basculée.

Avantageusement, les protubérances sont formées par injection de matière ou par surmoulage sur le patin, ou bien l'ensemble formé par le patin et les protubérances est formé par moulage.

Cela permet de simplifier la fabrication et le montage du dispositif

Ainsi, la technique selon l'invention dans ses différentes approches, permet de limiter la vibration des patins à l'intérieur des rails de guidage et permet en outre des tolérances au niveau du montage et des réglages. En effet, la technique décrite ne nécessite pas que les patins soient exactement au même niveau, c'est-à-dire que la barre de tirage soit exactement parallèle au tube d'enroulement.

En outre, les deux rails peuvent être montés à des niveaux légèrement différents sans que cela ne soit gênant. Ainsi lorsque la toile du dispositif est déployée horizontalement, une tolérance quant à la hauteur à laquelle sont montés les rails sera possible.

Un tel dispositif selon l'invention peut être mis en oeuvre notamment pour l'occultation d'au moins un des éléments appartenant au groupe comprenant :
- les vitres latérales ;
- les vitres de custode ;
- les vitres arrière ;
- les pavillons ;
- les toits ouvrants ;
- les espaces destinés à recevoir des bagages.

De façon avantageuse, au moins un desdits patins est entraîné en coulissement dans ledit rail par l'intermédiaire d'un câble, d'une courroie, et/ou d'un bras d'actionnement.

Il peut également être envisagé que les patins soient entraînés en coulissement dans les rails par actionnement manuel de la barre de tirage, ces différents modes d'actionnement pouvant bien sûr être cumulés.

L'invention concerne également les véhicules automobiles comprenant au moins un dispositif d'occultation tel que décrit ci-dessus.

D'autres caractéristiques et avantages de l'invention apparaîtront plus clairement à la lecture de la description suivante d'un mode de réalisation préférentiel de l'invention, donnée à titre de simple exemple illustratif et non limitatif, et des dessins annexés parmi lesquels :
- la figure 1 illustre de façon schématique un dispositif d'occultation selon l'invention en position partiellement déployée ;
- la figure 2 présente une coupe longitudinale d'un rail de guidage selon la figure 1 au niveau d'un patin, selon la première approche de l'invention ;
- la figure 3 est une vue en coupe transversale d'un patin logé à l'intérieur du rail de guidage selon la figure 2 ;
- la figure 4 est une vue en coupe longitudinale d'un patin et d'un rail de guidage, selon la seconde approche de l'invention avant le montage du patin à l'intérieur du rail;
- la figure 5 est une vue en coupe longitudinale d'un patin selon la figure 4 monté à l'intérieur du rail de guidage.

Le principe général de l'invention repose donc sur un dispositif d'occultation pour véhicule automobile mettant en oeuvre une barre de tirage sur laquelle s'exerce une contrainte, les patins équipant les extrémités de la barre de tirage étant dans une position basculée à l'intérieur des rails de guidage.

Les patins sont ainsi chacun en appui contre les deux parois opposées d'un rail de guidage, ce qui permet d'empêcher ou tout au moins de limiter leur vibration à l'intérieur des rails lorsque le véhicule est en mouvement et en conséquence de s'affranchir du bruit dû aux vibrations.

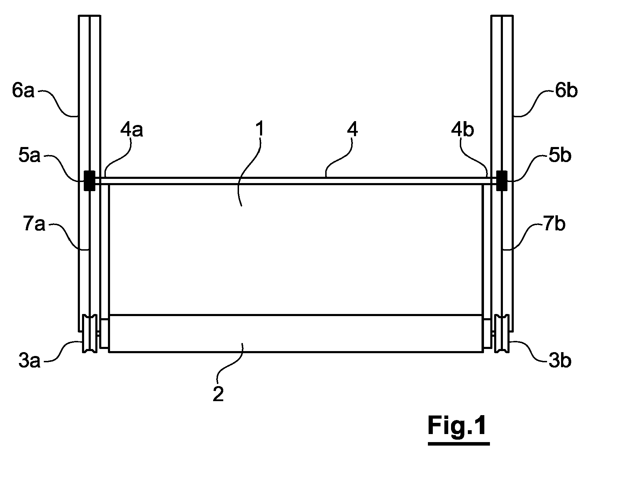

On présente en relation avec la figure 1, un exemple de dispositif d'occultation selon l'invention dans lequel un rideau d'occultation (ou toile d'occultation) 1 est partiellement déployé. Le rideau 1 est monté sur un tube d'enroulement 2 comprenant des moyens de rappel permettant le repliement du rideau 1.

Le tube d'enroulement 2 est solidaire de deux paliers 3a, 3b montés de part et d'autre de celui-ci.

L'extrémité libre du rideau d'occultation 1 est équipée d'une barre de tirage 4 dont les extrémités 4a, 4b portent des patins (ou chariots) 5a, 5b se déplaçant dans des rails de guidage 6a, 6b.

Ce dispositif d'occultation est destiné notamment à l'occultation de surfaces vitrées telle qu'une vitre latérale, une vitre de custode ou une vitre arrière de véhicule automobile.

Il peut également être utilisé pour l'occultation d'un pavillon ou d'un toit ouvrant ou encore pour l'occultation d'un espace destiné à recevoir les bagages.

Une contrainte s'exerce sur la barre de tirage 4, et notamment à ses extrémités, et les patins 5a, 5b sont en position basculée à l'intérieur des rails 6a, 6b.

Selon une première approche de l'invention, la contrainte s'exerçant sur la barre de tirage est directement appliquée à la barre de tirage 4 (c'est-à-dire inhérente à celle-ci) et est transmise aux patins 5a, 5b fixés à ses extrémités 4a, 4b.

Selon un premier mode de réalisation, les moyens d'application d'une telle contrainte peuvent par exemple comprendre un vrillage de la barre 4. Dans ce cas, la contrainte en rotation s'exerçant à chacune des extrémités 4a, 4b de la barre de tirage 4 est inversée.

De façon avantageuse, le vrillage de la barre de tirage 4 est uniforme. La contrainte s'exerçant à chacune des extrémités 4a, 4b est ainsi exactement l'inverse de l'autre.

Sous l'effet de cette contrainte, les patins 5a, 5b, solidaires des extrémités 4a, 4b de la barre de tirage, sont dans une position basculée inversée l'un par rapport à l'autre.

Selon un second mode de réalisation, les moyens d'application de la contrainte peuvent comprendre des moyens de rappel situés à l'intérieur de la barre de tirage 4.

De préférence, la contrainte de rappel provoquant une légère rotation de la barre de tirage sera alors choisie de façon qu'elle concourt à tendre le rideau d'occultation 1. La barre de tirage présentant des moyens de rappel permettra ainsi également d'améliorer la tension de la toile, ce qui présente un intérêt esthétique évident pour un tel dispositif, dans la mesure ou cela évite que la toile ne « pôche ».

Ainsi, dans le cas où des moyens de rappel exercent une contrainte sur la barre de tirage 4, la contrainte au niveau de chacune de ses extrémités 4a, 4b est la même, et s'exerce donc dans le même sens. Les patins sont ainsi dans une position basculée identique.

Les moyens de solidarisation des patins 5a, 5b à la barre de tirage 4 sont choisis de façon que la contrainte en rotation de la barre de tirage 4 s'exerçant à ses extrémités 4a et 4b (due au vrillage de celle-ci ou à des moyens de rappel) soit transmise respectivement aux patins 5a et 5b.

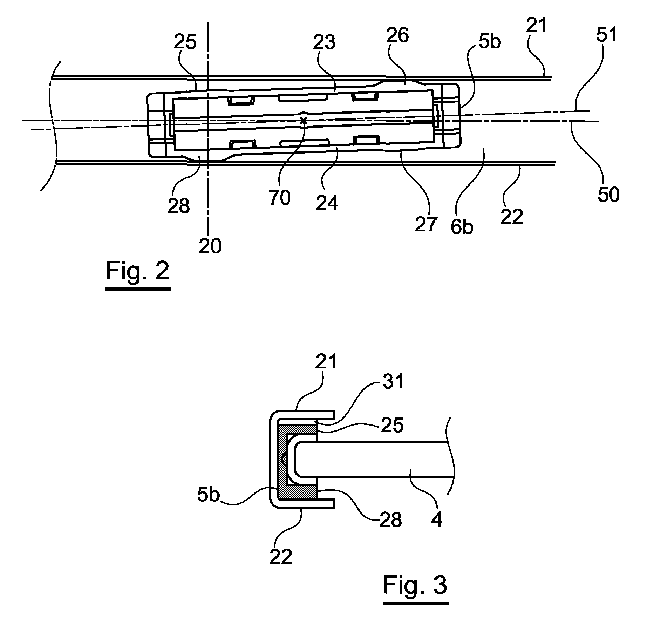

La figure 2 présente, en coupe longitudinale, le rail de guidage 6b et le patin 5b situé à l'intérieur de celui-ci selon la figure 1.

Des références numériques identiques désignent les mêmes éléments sur les figures 1, 2, 3 et 4. Sur la figure 2, seule une partie du rail de guidage 6b est représentée.

Le patin 5b est en position basculée à l'intérieur du rail 6b sous l'effet de la contrainte s'exerçant sur la barre de tirage 4, et est en appui contre deux parois opposées 21, 22 du rail 6b.

Selon un mode préféré de l'invention, le patin 5b présente quatre protubérances 25, 26, 27, 28 réparties à chacune des deux extrémités de deux faces opposées 23, 24 du patin. Les deux faces opposées 23, 24 sont tournées respectivement vers les deux parois opposées 21, 22 du rail 6b.

La présence des quatre protubérances 25, 26, 27, 28 permet de limiter la surface du patin susceptible d'être à l'origine de frottements lors du déplacement du patin 5b.

Selon une première variante de l'invention, les quatre protubérances pourront être de même hauteur.

Selon un mode de réalisation avantageux de l'invention, et comme illustré par la figure 2, les deux premières protubérances 26, 28 des quatre protubérances 25, 26, 27, 28, situées chacune à une extrémité différente de chacune des deux faces opposées 23, 24, présentent une hauteur supérieure aux deux secondes protubérances 25, 27.

Le patin 5b est alors asymétrique par rapport à un plan perpendiculaire à l'axe longitudinal du rail de guidage 6b dans lequel il se déplace.

Dans sa position basculée, l'axe longitudinal 51 du patin 5b forme un angle non nul avec l'axe longitudinal 50 du rail 6b. Les sommets des premières protubérances 26, 28 sont en appui respectivement contre les parois opposées 21, 22 du rail 6b.

De façon avantageuse, les deux premières protubérances 26, 28 sont de même hauteur.

Le patin 5b présentant les protubérances 25, 26, 27 et 28 est alors symétrique par rapport au centre de symétrie 70.

Avantageusement, les patins 5a, 5b sont solidarisés à la barre de tirage 4 de façon que l'axe défini par la barre de tirage passe par le centre de symétrie 70 des patins de façon que la contrainte s'exerçant sur la barre de tirage soit transmise efficacement aux patins 5a, 5b.

De façon avantageuse, les patins 5a, 5b présentant des protubérances de différentes hauteurs comme décrits précédemment, sont solidarisés à la barre de tirage 4 dans le sens dans lequel, sous l'effet de la contrainte s'exerçant sur la barre de tirage, les patins sont dans la position basculée dans laquelle les premières protubérances 26, 28 sont en appui contre les parois 21, 22 des rails.

Ainsi, lorsque la barre de tirage 4 est vrillée, la contrainte s'exerçant à chacune de ses extrémités 4a et 4b est inversée. Il convient alors que les deux patins 5a, 5b, s'ils sont identiques, soient placés en sens inverse l'un par rapport à l'autre. Dans leur position basculée, ce sont alors bien les premières protubérances 26, 28 de chacun des deux patins 5a, 5b qui sont en appui contre les parois 21, 22 des rails de guidage 6a, 6b.

En revanche, lorsque la contrainte s'exerçant sur la barre de tirage est due à des moyens de rappel, tel qu'un ressort de rappel logé à l'intérieur de la barre de tirage 4, la contrainte s'exerçant à chacune des extrémités 4a, 4b est la même. Chacun des patins 5a, 5b est alors dans une position basculée identique et il convient, lors de la solidarisation de patins asymétriques à la barre de tirage, de placer les deux patins dans le même sens.

Les dimensions et la forme des protubérances pourront être choisies de façon notamment à limiter les frottements des patins lors de leur déplacement dans les rails de guidage et de façon à permettre leur basculement rapide dans la position d'appui et une bonne stabilité dans cette position afin de limiter leur vibration.

Avantageusement, selon cette première approche de l'invention, la hauteur séparant les sommets des deux premières protubérances 26, 28 est inférieure à la distance séparant les deux parois opposées 21, 22 d'un rail.

La figure 3 illustre une coupe transversale selon l'axe 20 de la figure 2. Elle présente ainsi une coupe du patin 5b au niveau d'une de ses extrémités et des protubérances 25, 28 de chacune des faces 23, 24.

Le rail de guidage 6b pourra classiquement être un rail en U présentant deux parois parallèles opposées 21, 22 (également appelées « faces opposées » du rail).

La première protubérance 28 est contre la paroi 22 du rail 6b sous l'effet de la contrainte s'exerçant sur la barre de tirage, et un jeu 31 sépare la seconde protubérance 25 de la paroi 21.

Il sera bien sûr possible de ne prévoir la présence que des premières protubérances 26, 28 et pas des secondes protubérances 25, 27.

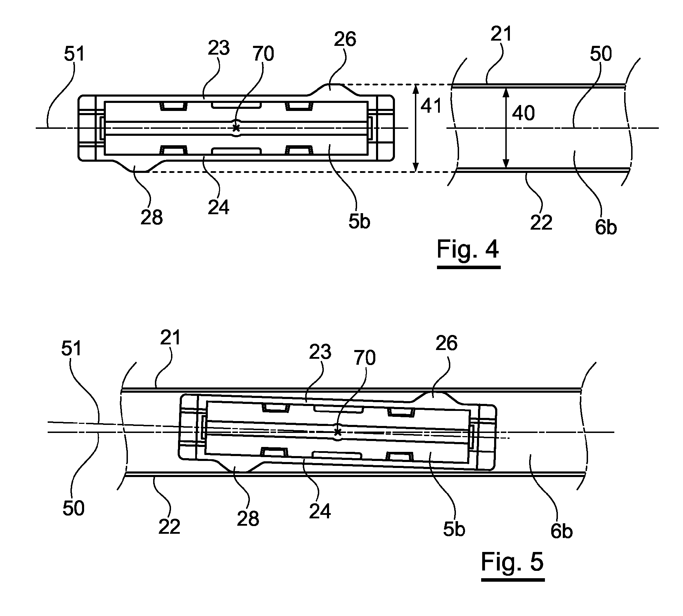

Selon une seconde approche de l'invention illustrée par les figures 4 et 5, les moyens d'application de la contrainte comprennent les patins. Ainsi, selon cette approche, la contrainte n'est pas inhérente à la barre de tirage et transmise aux patins, mais au contraire exercée par les patins sur la barre de tirage.

La figure 4 illustre la coupe longitudinale d'un rail de guidage 6b et d'un patin 5b avant l'introduction de celui-ci à l'intérieur du rail.

Selon cette approche, le patin 5b présente deux premières protubérances 26, 28 portées chacune à une extrémité différente des deux faces 23 et 24 du patin. La hauteur 41 séparant les sommets des deux premières protubérances 26, 28 est supérieure à la distance 40 séparant les deux parois internes 21, 22.

Ainsi, le patin 5b ne peut être introduit à l'intérieur du rail 6b lorsque l'axe longitudinal 51 du patin est aligné avec l'axe longitudinal du rail 6b. Dans la mesure où la hauteur 41 séparant les deux premières protubérances est supérieure à largeur 40 du rail, il est en effet nécessaire de basculer le patin 5b pour pouvoir introduire celui-ci à l'intérieur du rail 6b.

La figure 5 illustre la coupe longitudinale du patin 5b logé à l'intérieur du rail 6b selon la figure 4. Le patin 5b est dans une position basculée, son axe longitudinal 51 formant un angle non nul avec l'axe longitudinal 50 du rail 6b.

Selon cette seconde approche de l'invention, les deux patins 5a, 5b équipant les extrémités de la barre de tirage 4 sont inversés l'un par rapport à l'autre. Ainsi, lorsqu'ils sont introduits à l'intérieur des rails 6a, 6b lors du montage, ils sont dans des positions basculées inversées. Cela est à l'origine d'un vrillage de la barre de tirage 4 sur laquelle ne s'exerçait pas de contrainte avant le montage.

Ce vrillage de la barre de tirage 4 maintient les patins 5a et 5b dans la position basculée dans laquelle les premières protubérances 26, 28 sont en contact avec les parois 21, 22 des rails, les empêchant de basculer plus à l'intérieur des rails.

Selon le mode de réalisation illustré par les figures 4 et 5, les patins ne présentent que deux premières protubérances. Il sera cependant bien sûr possible d'envisager la présence de deux secondes protubérances, comme illustré par la figure 2, et dont la hauteur soit inférieure à celle des premières protubérances et ne gêne pas l'introduction du patin dans le rail en position basculée.

Avantageusement, dans le cas de patins tels que présentés dans les figures 2 à 4, chacune des faces des premières protubérances 26, 28 en appui contre les parois 21, 22 du rail 6b, et dirigées chacune vers l'extrémité du patin 5b, pourra être biseautée.

Ainsi, la position d'appui des patins lorsqu'ils sont en position basculée contre les parois des rails est plus stable. En outre, cela permet, notamment selon la seconde approche de l'invention, selon laquelle le patin doit être dans une position basculée pour être introduit dans le rail, une introduction plus aisée de celui-ci dans le rail.

Différents modes d'actionnement du dispositif d'occultation selon l'invention pourront être prévus, celui-ci pouvant être à déploiement manuel et/ou motorisé.

La barre de tirage 4 pourra par exemple être actionnée manuellement par l'utilisateur.

Des moyens de motorisation pourront également être prévus, tels que des leviers d'actionnement (par exemple des biellettes) ou des câbles d'actionnement.

Il sera possible de prévoir la présence de deux poulies d'entraînement 3a,3b de part et d'autre du tube d'enroulement 2 et autour desquelles circulent des câbles d'entraînement 7a, 7b circulant dans les rails de guidage 6a, 6b.

Ainsi, lorsqu'un moteur actionne la rotation du tube d'enroulement et des poulies d'entraînement 3a,3b, les câbles d'entraînement 7a, 7b entraînent en coulissement les patins 5a, 5b dans les rails 6a, 6b et la barre de tirage 4. Le rideau 1 est ainsi déployé ou replié en fonction du sens de rotation du tube d'enroulement 2.

L'invention permet ainsi de façon simple la mise en oeuvre d'un dispositif d'occultation permettant de limiter le bruit dû à la vibration des patins équipant les extrémités de la barre de tirage en évitant, ou tout au moins en limitant, les vibrations de ceux-ci à l'intérieur des rails.

Dans le cas où le dispositif d'occultation est équipé de baleines de renfort coulissant également dans des rails de guidage, il sera possible d'appliquer le principe de l'invention à celles-ci, de façon que des patins équipant leurs extrémités soient en appui contre les parois opposées des rails, afin d'éviter leur vibration lorsque le véhicule est en mouvement.

## Revendications

1. Dispositif d'occultation pour véhicule automobile, comprenant une toile d'occultation (1) dont une extrémité est montée sur un tube d'enroulement (2) et l'autre extrémité porte une barre de tirage (4), ladite barre de tirage (4) portant à chacune de ses extrémités (4a,4b) un patin (5a,5b) monté coulissant dans un rail de guidage (6a,6b),
**caractérisé en ce qu'**il comprend des moyens d'application d'une contrainte sur au moins une desdites extrémités (4a,4b) de ladite barre de tirage (4), et **en ce qu'**au moins un desdits patins (5a,5b) est dans une position basculée dans laquelle il est en appui contre deux parois opposées (21,22) dudit rail (6a,6b), de façon à limiter les vibrations.

2. Dispositif d'occultation selon la revendication 1, **caractérisé en ce que** lesdits moyens d'application d'une contrainte comprennent le vrillage de ladite barre de tirage (4).

3. Dispositif d'occultation selon la revendication 1, **caractérisé en ce que** lesdits moyens d'application d'une contrainte comprennent des moyens de rappel de ladite barre de tirage (4).

4. Dispositif d'occultation selon l'une quelconque des revendications 1 à 3, **caractérisé en ce que** lesdits patins (5a,5b) sont solidarisés à ladite barre de tirage (4) de façon que ladite contrainte soit transmise auxdits patins (5a,5b).

5. Dispositif d'occultation selon l'une quelconque des revendications 1 à 4, **caractérisé en ce qu'**au moins un desdits patins (5a,5b) est asymétrique par rapport à un plan perpendiculaire à l'axe longitudinal (50) dudit rail de guidage (6a,6b) dans lequel se déplace ledit patin (5a,5b).

6. Dispositif d'occultation selon l'une quelconque des revendications 1 à 5, **caractérisé en ce qu'**au moins un desdits patins (5a,5b) présente deux premières protubérances (26,28) réparties chacune à une extrémité différente de chacune de deux faces opposées (23,24) tournées vers deux parois opposées (21,22) dudit rail (6a,6b).

7. Dispositif d'occultation selon la revendication 6, **caractérisé en ce qu'**au moins un desdits patins (5a,5b) présente en outre deux secondes protubérances (25,27) situées chacune à une extrémité différente de chacune desdites deux faces opposées (23,24) ne présentant pas de première protubérance (26,28).

8. Dispositif d'occultation selon la revendication 7, **caractérisé en ce que** lesdites secondes protubérances (25,27) présentent une hauteur inférieure auxdites premières protubérances (26,28).

9. Dispositif d'occultation selon la revendication 3, **caractérisé en ce que** lesdits patins (5a,5b) sont identiques et placés dans le même sens l'un par rapport à l'autre dans chacun desdits rails (6a,6b).

10. Dispositif d'occultation selon la revendication 2, **caractérisé en ce que** lesdits patins (5a,5b) sont identiques et placés en sens inverse l'un par rapport à l'autre dans chacun desdits rails (6a,6b).

11. Dispositif d'occultation selon la revendication 1, **caractérisé en ce que** lesdits moyens d'application d'une contrainte comprennent lesdits patins (5a,5b), au moins un desdits patins (5a,5b) présentant deux premières protubérances (26,28) réparties chacune à une extrémité différente de chacune de deux faces opposées (23,24) tournées vers deux parois opposées (21,22) dudit rail (6a,6b).

12. Dispositif d'occultation selon la revendication 11, **caractérisé en ce que** la hauteur (41) séparant le sommet desdites deux premières (26,28) protubérances est supérieure à la distance (40) entre lesdites deux parois opposées (21,22) dudit rail (6a,6b).

13. Dispositif d'occultation selon l'une quelconque des revendications 11 et 12, **caractérisé en ce que** lesdits patins (5a,5b) sont identiques et placés en sens inverse l'un par rapport à l'autre dans chacun desdits rails (6a,6b).

14. Dispositif d'occultation selon l'une quelconque des revendications 6 à 13, **caractérisé en ce que** lesdites protubérances (25,26,27,28) sont formées par injection de matière ou par surmoulage sur ledit patin (5a,5b).

15. Dispositif d'occultation selon l'une quelconque des revendications 6 à 13, **caractérisé en ce que** l'ensemble formé par ledit patin (5a,5b) et lesdites protubérances (25,26,27,28) est formé par moulage.

16. Dispositif d'occultation selon l'une quelconque des revendications 1 à 15, **caractérisé en ce qu'**il est mis en oeuvre pour l'occultation d'au moins un des éléments appartenant au groupe comprenant :
- les vitres latérales ;
- les vitres de custode ;
- les vitres arrière ;
- les pavillons ;
- les toits ouvrants ;
- les espaces destinés à recevoir des bagages.

17. Dispositif d'occultation selon l'une quelconque des revendications 1 à 16, **caractérisé en ce qu'**au moins un desdits patins (5a,5b) est entraîné en coulissement dans ledit rail (6a,6b) par l'intermédiaire d'un câble (7a,7b), d'une courroie, et/ou d'un bras d'actionnement.

18. Dispositif d'occultation selon l'une quelconque des revendications 1 à 17, **caractérisé en ce que** lesdits patins (5a,5b) sont entraînés en coulissement dans lesdits rails (6a,6b) par actionnement manuel de ladite barre de tirage (4).

19. Véhicule automobile **caractérisé en ce qu'**il comprend au moins un dispositif d'occultation selon l'une quelconque des revendications 1 à 18.
